# EUROPEAN PATENT APPLICATION

(11) **EP 3 103 634 A1**
(43) Date of publication of application: **14.12.2016**
(21) Application number: 15171595.0
(22) Date of filing: 11.06.2015
(51) Int. Cl.: B32B 5/02, B32B 5/18, B32B 5/24, B32B 7/02, B32B 7/04, B32B 7/08, B32B 7/12, B32B 9/02, B32B 9/04, B32B 3/26, B32B 3/30, A63B 6/00

(54) **Mat for performing yoga exercises and other sporting activities.**

(71) Applicant: Rilievi Group S.R.L., 40132 Bologna (IT)
(72) Inventor: FRANCESCHINI, Elena, 44028 Poggio Renatico FE (IT); GALLIANO, Michele, 40069 Zola Predosa BO (IT); FINELLI, Simona, 40069 Zola Predosa BO (IT)
(74) Representative: Modiano, Micaela Nadia

(57) **Abstract**

A mat (1) for performing yoga exercises and other sporting activities, which comprises at least one outer layer (2) made with a fabric of a material preferably selected from microfiber, cotton, polyamide, linen, silk, wool, polyester, acetate, cupro fiber, viscose, elastane, polypropylene, leather, imitation leather or combinations thereof including with other materials, and at least one inner layer (3) of a material of the type of polyurethane foam.

The at least one outer layer (2) and the at least one inner layer (3) are mutually coupled by way of a process selected from heat-formation, stitching, gluing and the like, so as to define a surface contouring which comprises a plurality of prominences (4) and recesses (5) which are mutually adjacent and aligned

## Description

The present invention relates to a mat for performing yoga exercises and other sporting activities.

Yoga is a method of physical, breathing, and mental techniques which contribute to personal wellbeing in a natural and gradual manner.

In addition to its philosophical, meditative and spiritual aspects, yoga is also a physical discipline because one of its traditions, tantric yoga, places the emphasis, through hatha yoga, on the health of the physical body through a series of purification techniques, physical (asana) and breathing (pranayama).

Many of the exercises and positions that the yoga practitioner assumes during his/her "training" require the practitioner to be resting directly on the ground.

Obviously the activity, carried out in gyms, requires the practitioner to use mats in order to avoid direct contact with the ground: this choice is dictated by reasons of hygiene (the floor may be dirty) and by reasons of thermal insulation (the floor may be cold, which would impair the necessary muscular elasticity of the practitioner).

The use is known of mats, which for the most part are made of expanded material (the term "expanded" is used hereinafter to mean an expanded polymeric or elastomeric material), in order to facilitate the carrying out of exercises on the ground as part of some sporting activities and, in particular, in yoga.

These materials have unfortunately a high porosity which can lead to the absorption of sweat and dust.

Unfortunately the removal of such substances from the mat is not possible, at least not completely, and thus these mats can be quite unhygienic after a long period of use.

The characteristics of the expanded material further imply the substantial impossibility of effectively folding up the mat in order to transport it more easily: mats made of expanded material are in fact usually rolled up, thus maintaining a high space occupation.

It should further be noted that the tactile and visual sensation of conventional mats made of expanded material is not particularly appreciated by the users.

In the practice of yoga, a condition of wellbeing is sought, and thus it is necessary that the conditions under which such discipline is practiced be as pleasant as possible.

Some practitioners resort to arranging sheets of toweling or fabric above the mats made of expanded material in order to avoid unpleasant contact with them; but given the dynamism of the activities to be carried out, these sheets tend to move, shifting from the position initially imposed and requiring the practitioner to make numerous adjustments which can impair the quality of his/her yoga session.

The principal aim of the present invention is to solve the above mentioned drawbacks, by providing a mat for performing yoga exercises and other sporting activities which has optimal hygiene characteristics.

Within this aim, an object of the invention is to provide a mat for performing yoga exercises and other sporting activities which can be easily folded for easy transport and storage.

Another object of the invention is to provide a mat for performing yoga exercises and other sporting activities which is pleasing to the touch and to the eye.

Another object of the invention is to provide a mat for performing yoga exercises and other sporting activities which does not require the adoption of further covering elements in order to be used.

Another object of the present invention is to provide a mat for performing yoga exercises and other sporting activities which is low cost, easily and practically implemented, and safe in use.

This aim and these objects are achieved by a mat for performing yoga exercises and other sporting activities, characterized in that it comprises at least one outer layer made with a fabric of a material preferably selected from microfiber, cotton, polyamide, linen, silk, wool, polyester, acetate, cupro fiber, viscose, elastane, polypropylene, leather, imitation leather or combinations thereof including with other materials, and at least one inner layer of a material of the type of polyurethane foam, said at least one outer layer and said at least one inner layer being mutually coupled by way of a process selected from heat-formation, stitching, gluing and the like, so as to define a surface contouring which comprises a plurality of prominences and recesses which are mutually adjacent and aligned.

Further characteristics and advantages of the invention will become better apparent from the detailed description that follows of a preferred, but not exclusive, embodiment of the mat for performing yoga exercises and other sporting activities according to the invention, which is illustrated by way of non-limiting example in the accompanying drawings, wherein:

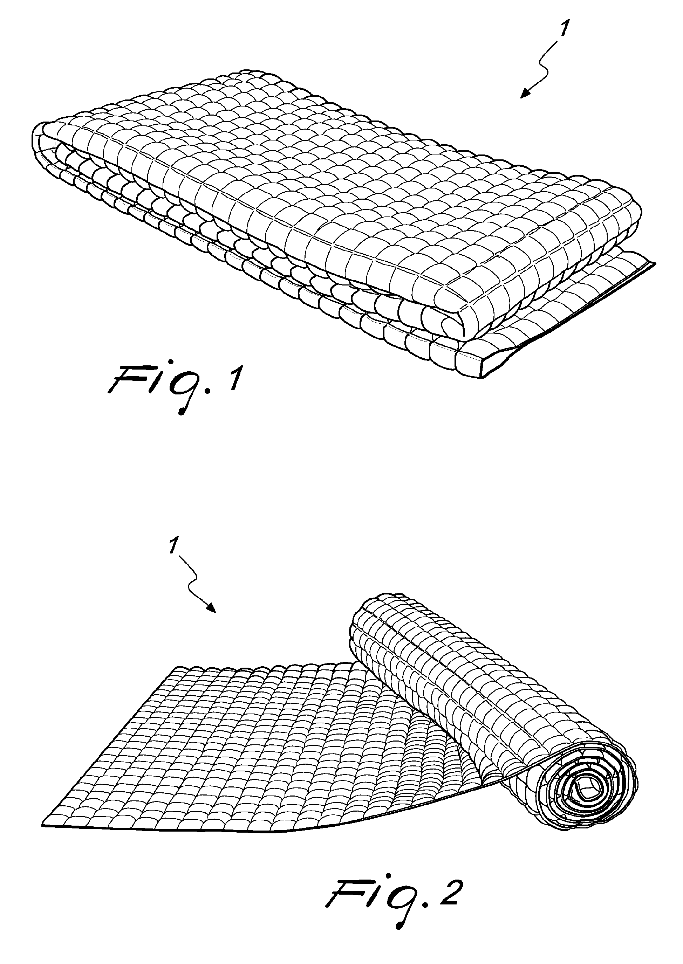

Figure 1 is a perspective view of a mat for performing yoga exercises and other sporting activities according to the invention, in the folded configuration;
Figure 2 is a perspective view of a mat for performing yoga exercises and other sporting activities according to the invention, in the rolled configuration;

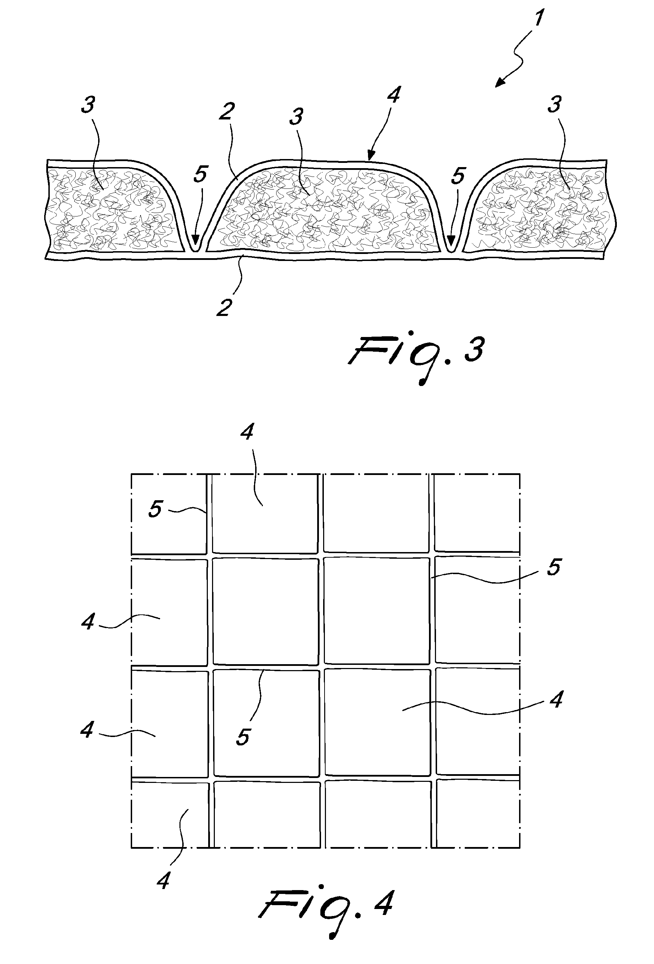

Figure 3 is an enlarged schematic view of a mat for performing yoga exercises and other sporting activities according to the invention;
Figure 4 is an enlarged view of a possible variation of a mat for performing yoga exercises and other sporting activities according to the invention;

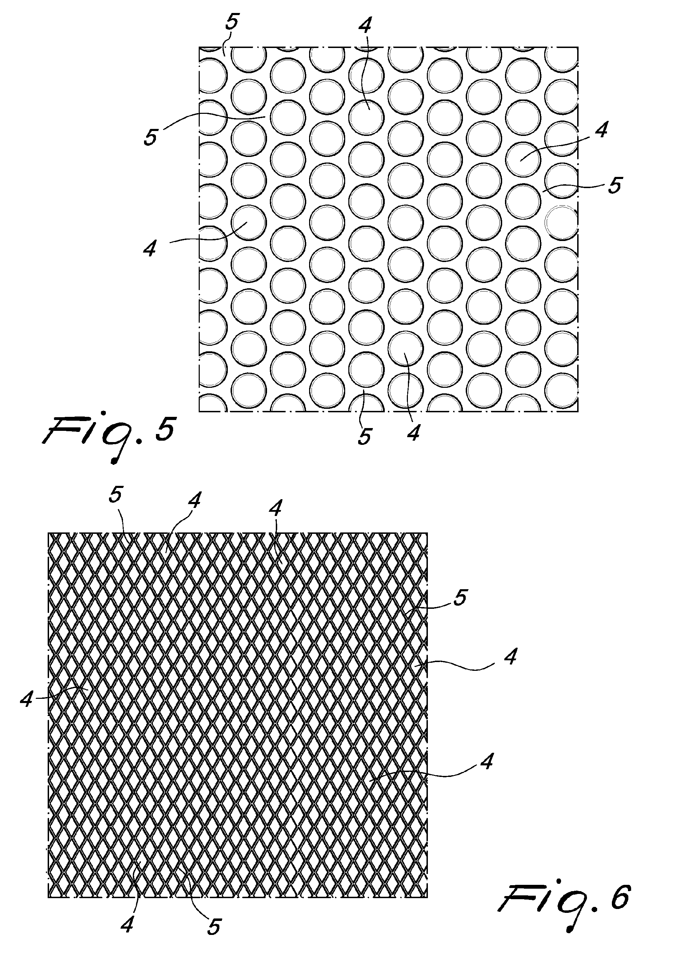

Figure 5 is an enlarged view of a further variation of a mat for performing yoga exercises and other sporting activities according to the invention;
Figure 6 is an enlarged view of another variation of a mat for performing yoga exercises and other sporting activities according to the invention.

With particular reference to the figures, the reference numeral 1 generally designates a mat for performing yoga exercises and other sporting activities.

The mat 1 is effectively shaped like a mat of low thickness, intended to be laid on the ground for accommodating the practitioner of yoga or of other sporting activities which involve carrying out exercises on the ground.

The mat 1 comprises at least one outer layer 2 which is made of a fabric constituted by a material preferably selected from microfiber, cotton, polyamide, linen, silk, wool, polyester, acetate, cupro fiber, viscose, elastane, polypropylene, leather, imitation leather or combinations thereof including with other materials.

The mat 1 further comprises at least one inner layer 3 made of a material of the type of polyurethane foam.

The adoption is not ruled out of other materials for the inner layer 3 as long as they have similar physical properties to those of polyurethane (for example polymeric foams, elastomeric materials, cotton tufts, wool tufts and the like).

It should further be noted that in the mat 1 according to the invention the at least one outer layer 2 and the at least one inner layer 3 are mutually coupled by way of a process selected from heat-formation, stitching, gluing and the like, so as to define a surface contouring which comprises a plurality of prominences 4 and recesses 5 which are mutually side by side and aligned.

Heat-formation is a technique of molding polymeric materials under heat, starting from layers or films, under pressure or under a vacuum.

In heat-formation under a vacuum, the layers of preheated polymeric material are laid on the mold die by aspiration (vacuum), thus copying all sinuous features of the mold die.

In heat-formation under pressure, the layers of polymeric material are driven onto the mold die by way of a high pressure applied from the outside, with air flows, which also facilitate their cooling. Alternatively it is possible to use the system of female and male die parts, actuated mechanically with the aid of simple oil-hydraulic presses.

According to an embodiment of undoubted practical and applicative interest, the mat 1 will comprise two outer layers 2, one upper and one lower, which will completely delimit the inner layer 3, confining it between their mutually facing surfaces.

With particular reference to a specific implementation application of undoubted practical and implementation interest, the outer layer 2 is preferably constituted by a fabric which comprises microfiber polyamide in a percentage comprised between 50% and 90%, and elastane in a percentage comprised between 5% and 40%.

It should be noted that, in particular, microfiber polyamide will be present in a percentage proximate to 80%, and elastane in a percentage proximate to 20%.

Microfiber is the term used in the textiles sector to mean synthetic fibers that have a titer of less than or equal to 1 dtex.

A fiber has a titer of 1 dtex when 10,000 meters of it weigh one gram. Microfibers are therefore very fine fibers which can be used in different sectors from furnishings to clothing. Their basic characteristic is that they are much softer than similar textile products made with normal synthetic fibers. The term "microfiber" does not indicate any one specific textile fiber. According to the Italian textile labeling law, no. 194 of 1999, the term may not be used on its own, but only following the name of the polymer that constitutes it. For example "100% polyester microfiber", but not "100% microfiber". The second expression is incorrect.

Furthermore, since it is a qualification of the fibers used to make the product, the maker is required to ensure the use of the wording in publicizing the product is in fact correct, by verifying the nature of the fibers used to make the product.

Elastane (or elastan) is a synthetic polyurethane fiber which is extensively used for elasticizing fabrics. The best-known commercial name is Lycra®.

The possibility is not excluded of adopting implementation solutions which are different from the one described above, for example, implementation solutions in which the outer layer 2, made of fabric, comprises at least one material which is selected from cotton jersey, terry cotton, chenille, fleece and the like.

Currently these materials are adopted for the outer layer 2, and the possibility exists of using other fibers, natural and/or synthetic.

It should further be noted that the surface contouring comprises a plurality of prominences 4 which are preferably polygonal, circular, or irregular in shape and which conform to a preset pattern.

It is already planned to make a mat 1 in which the prominences 4 have a substantially square shape; subsequent production runs will be identified by rectangular, circular and rhomboid prominences 4.

The shape of each prominence 4 can be the shape of a specific pattern, for example an imaginative figure and/or the shape of the logo that identifies the mat 1 proper, or its maker or the gym (school) where yoga (or the generic sporting activity) is practiced.

It should moreover be noted that the surface contouring comprises a plurality of prominences 4 with a protrusion which is polyhedral, hemispherical, or hemi-ellipsoidal in shape and, generically, convex.

This specification is aimed at clarifying that the prominence 4 will ensure convenience for the practitioner by dint of its three-dimensionality, its protrusion, owing to the presence of the inner layer 3 which constitutes a padding.

Obviously, the surface contouring will also comprise, between contiguous prominences 4, respective recesses 5 which are shaped like straight, curved, or irregular bands and which conform to a preset pattern.

The width and pattern of the bands will be determined by the appearance that it is desired to confer on the mat 1.

The width and the shape of each band can also be irregular, in order to meet specific implementation requirements.

It should be noted that the at least one outer layer 2 and the at least one inner layer 3 are made of materials that are washable by way of apparatuses selected from domestic washing machines, industrial washing machines and dry-cleaning assemblies.

The mat 1 has a length comprised between 1200 mm and 2400 mm, preferably of the order of 1800 mm, and a width comprised between 200 mm and 1500 mm, preferably of the order of the 600 mm.

The thickness of the mat 1 will be comprised between 5 mm and 100 mm, preferably of the order of 15-35 mm.

Advantageously the present invention solves the above mentioned problems, by providing a mat 1 for performing yoga exercises and other sporting activities which has optimal hygiene characteristics. In fact it is made of materials that can be washed in a washing machine (both with domestic washing machines and with industrial washing machines, and also by dry cleaning). The adoption of an outer layer 2 made of fabric and the adoption of an inner layer 3 made of a material of the type of (expanded) polyurethane ensures that water (or other solvent) and detergents/disinfectants can penetrate deep into the mat 1, flowing over every part thereof and ensuring a complete and optimal wash.

Conveniently the mat 1 can be easily folded for easy transport and storage. The materials adopted in fact can be crushed without being damaged and/or permanently deformed.

Positively the mat 1 is pleasing to the touch and to the eye. In fact the outer layer 3, which is preferably made of microfiber of polyamide and elastane, is soft and pleasing to the touch, and the presence of the plurality of prominences 4 and recesses 5 ensures the pleasing appearance overall.

Advantageously the mat 1 does not require the use of further covering elements in order to be used and thus it is very convenient for the user.

Profitably the mat 1 according to the invention is low cost, easily and practically implemented, and safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A mat for performing yoga exercises and other sporting activities, **characterized in that** it comprises at least one outer layer (2) made with a fabric of a material preferably selected from microfiber, cotton, polyamide, linen, silk, wool, polyester, acetate, cupro fiber, viscose, elastane, polypropylene, leather, imitation leather or combinations thereof including with other materials, and at least one inner layer (3) of a material of the type of polyurethane foam, said at least one outer layer (2) and said at least one inner layer (3) being mutually coupled by way of a process selected from heat-formation, stitching, gluing and the like, so as to define a surface contouring which comprises a plurality of prominences (4) and recesses (5) which are mutually adjacent and aligned.

2. The mat according to claim 1, **characterized in that** said outer layer (2) is constituted by a fabric constituted by polyamide microfiber in a percentage comprised between 50% and 90%, and elastane in a percentage comprised between 5% and 40%.

3. The mat according to claim 1, **characterized in that** said outer layer (2) in fabric comprises at least one material selected from cotton jersey, terry cotton, chenille, fleece and the like.

4. The mat according to claim 1, **characterized in that** said surface contouring comprises a plurality of prominences (4) which are polygonal, circular, or irregular in shape and which conform to a preset pattern.

5. The mat according to claim 1, **characterized in that** said surface contouring comprises a plurality of prominences (4) with a protrusion which is polyhedral, hemispherical, or hemi-ellipsoidal in shape and, generically, convex.

6. The mat according to claim 1, **characterized in that** said surface contouring comprises recesses (5) which are shaped like straight, curved, or irregular bands and which conform to a preset pattern.

7. The mat according to one or more of the preceding claims, **characterized in that** said at least one outer layer (2) and said at least one inner layer (3) are washable by way of apparatuses selected from domestic washing machines, industrial washing machines and dry-cleaning assemblies.

8. The mat according to one or more of the preceding claims, **characterized in that** it has a length comprised between 1200 mm and 2400 mm, preferably of the order of 1800 mm, and a width comprised between 200 mm and 1500 mm, preferably of the order of the 600 mm.

9. The mat according to one or more of the preceding claims, **characterized in that** it has a thickness comprised between 5 mm and 100 mm, preferably of the order of 15-35 mm.
